# EUROPÄISCHE PATENTSCHRIFT

(11) **EP 2 060 359 B1**
(45) Veröffentlichungstag und Bekanntmachung des Hinweises auf die Patenterteilung: **13.07.2011**
(21) Anmeldenummer: 08013928.0
(22) Anmeldetag: 04.08.2008
(51) Int. Cl.: B24B 3/34, B24B 41/06, B23Q 3/157, B23Q 7/04, B23Q 1/48, B23Q 1/62

(54) **Schleifmaschine**
Grinding machine
Affûteuse

(30) Priorität: 13.11.2007 DE 102007054433
(43) Veröffentlichungstag der Anmeldung: 20.05.2009
(73) Patentinhaber: Haas Schleifmaschinen GmbH, 78647 Trossingen (DE)
(72) Erfinder: Braun, Hans-Dieter, 78665 Frittlingen (DE)
(74) Vertreter: Modrow, Stephanie

(56) Entgegenhaltungen:
- EP-A2- 1 291 122
- DE-A1- 10 111 098
- US-A- 4 809 422

## Beschreibung

Die Erfindung betrifft eine Schleifmaschine.

Bei automatisch gesteuerten Schleifmaschinen ist es erforderlich, dass zu bearbeitende Werkstück und das bearbeitende Schleifwerkzeug in den drei Raumachsen X, Y und Z gegeneinander zu positionieren. Weiter sind Rotationsachsen erforderlich, um das Werkstück und das Werkzeug entsprechend den zu bearbeitenden Flächen im Drehwinkel und im Achsneigungswinkel gegeneinander auszurichten. Bei Bearbeitungszentren ist es dabei bekannt (DE 102 49 473 A1, EP 1 747 845 A1), die linearen Hauptachsen auch dazu zu verwenden, nach dem sogenannten Pick-up-Prinzip Werkstücke von einer Transporteinrichtung zu laden bzw. Werkzeuge aus einem Magazin zu wechseln. Die programmierbaren Achsen für die Bearbeitung und den Werkstück- bzw. Werkzeugwechsel sind dabei auf die Werkstückspanneinrichtung und die Werkzeugspindel verteilt.

Aus der US 4 809 422 A ist eine Werkzeugmaschine bekannt, die als Bearbeitungszentrum ausgebildet ist und ein Maschinenkonzept mit den Merkmalen des Oberbegriff des Patentanspruchs 1 aufweist. Die Werkzeugspindel ist mit horizontaler Achse angeordnet und in einer linearen vertikalen Achse verfahrbar. Die Werkstückspanneinrichtung ist in zwei zueinander senkrechten horizontalen Achsen verfahrbar, um eine vertikale Achse schwenkbar und um ihre Achse drehbar. Am feststehenden Maschinenständer ist ein Werkzeugmaga.zin angeordnet, welches Werkzeuge in der Anordnung aufnimmt, dass die Achse der Werkzeuge in dem Werkzeugmagazin parallel zur Achse der Werkzeugspindel verläuft. Für einen Werkzeugwechsel wird die Werkzeugspindel in ihrer linearen Verfahrachse an das Werkzeugmagazin verfahren. Ein zusätzlicher Werkzeugwechsler ist erforderlich, um die Werkzeuge zwischen dem Werkzeugmagazin und der Werkzeugspindel zu wechseln. Weiter ist an das Maschinenbett ein Werkstückmagazin anbaubar. Mittels einer aufwändigen Handlungseinrichtung können Werkstücke zwischen der Werkstückspanneinrichtung und dem Werkstückmagazin gewechselt werden.

Der Erfindung liegt die Aufgabe zugrunde, eine Schleifmaschine zur Verfügung zu stellen, die bei kompaktem platzsparendem Aufbau und einfacher Steuerung einen Werkzeugwechsel ohne zusätzliche steuerbare Hilfsmittel ermöglicht.

Diese Aufgabe wird erfindungsgemäß gelöst, durch eine Schleifmaschine mit den Merkmalen des Patentanspruchs 1.

Vorteilhafte Ausführungen der Erfindung sind in den Unteransprüchen angegeben.

Erfindungsgemäß ist die Werkzeugspindel nur in der linearen Y-Achse verfahrbar, wobei die Achse der Werkzeugspindel in der X-Achse ausgerichtet bleibt. Die linearen Hauptachsen X und Z sowie die Rotationsachsen A und B sind in die Werkstückspanneinrichtung verlegt. In einfacher Weise kann dadurch die Bewegung der Werkzeugspindel in der Y-Achse dazu eingesetzt werden, um die Werkzeugspindel für einen Werkzeugwechsel zu einem Werkzeugmagazin zu verfahren und/oder auch zu einer Abrichtspindel, um eine an der Werkzeugspindel gespannte Schleifscheibe abzurichten. Die Schleifbearbeitung, das Abrichten und das Werkzeugmagazin können dabei sehr kompakt und platzsparend angeordnet werden, wobei sich dennoch eine räumliche Abgrenzung dieser Bereiche ergibt, so dass sich diese Bereiche nicht überschneiden und ein Höchstmaß an Kollisionssicherheit gewährleistet ist. Zusätzlich kann die Bewegung der Werkstückspanneinrichtung dazu verwendet werden, um Werkstücke nach dem Pick-up-Prinzip aus einem Werkstückmagazin einzuwechseln. Die Bewegung der Werkstückspanneinrichtung in zwei linearen Achsen und zwei Rotationsachsen führt dabei zu einer hohen Flexibilität in der Ausbildung der Werkstückmagazine und in der Anordnung der Werkstücke in dem Magazin.

Die Werkzeugspindel ist mit in der X-Richtung ausgerichteter Achse in einem Y-Werkzeugschlitten gelagert, der in der Y-Achse an dem Maschinenbett verfahrbar ist. Ein an dem Maschinenbett in der X-Achse linear verfahrbarer X-Schlitten trägt einen in der Z-Achse linear verfahrbaren Z-Schlitten, der die Werkstückspanneinrichtung trägt. Die Werkstückspanneinrichtung ist dabei um ihre Achse als A-Achse drehbar an einem Teilapparat gelagert, der um eine Rundachse als B-Achse drehbar an dem Z-Schlitten angeordnet ist, so dass die A-Achse der Werkstückspanneinrichtung in ihrer räumlichen Lage verschwenkt werden kann.

Das Werkzeugmagazin ist an dem X-Schlitten angeordnet. Dabei weist das Werkzeugmagazin wenigstens eine Werkzeugaufnahme auf, die so angeordnet ist, das allein durch Verfahren des Y-Schlittens die Werkzeugspindel axial fluchtend mit der Werkzeugaufnahme ausgerichtet werden kann. Durch Verfahren des Werkzeugmagazins in der X-Achse kann dann das Werkzeug aus der Werkzeugspindel entnommen bzw. in diese eingesetzt werden. Für den Werkzeugwechsel sind somit keine zusätzlichen steuerbaren Hilfsachsen erforderlich. Weist das Werkzeugmagazin mehrere Werkzeugaufnahmen auf, so können diese durch eine einfache Bewegung des Werkzeugmagazins an dem X-Schlitten in die Wechselposition gebracht werden.

Das Werkstückmagazin kann an dem Maschinenbett so angeordnet werden, dass die Werkstückspanneinrichtung unmittelbar mit den in dem Werkstückmagazin angeordneten Werkstücken in Eingriff gebracht werden kann. Hierzu wird die Werkstückspanneinrichtung mittels der B-Achse so verschwenkt, dass sie gegen das Werkstückmagazin entsprechend der Anordnung der Werkstücke ausgerichtet ist. Durch Verfahren der Werkstückspanneinrichtung mittels des Z-Schlittens und gegebenenfalls des X-Schlittens kann dann der Wechsel der Werkstücke zwischen der Werkstückspanneinrichtung und dem Werkstückmagazin durchgeführt werden.

Für ein Abrichten der an der Werkzeugspindel gespannten Schleifscheiben ist eine Abrichtspindel an dem Z-Schlitten gelagert. Die Achse der Abrichtspindel ist dabei parallel zur Achse der Werkzeugspindel in der X-Richtung ausgerichtet. Die Werkzeugspindel mit dem gespannten Schleifwerkzeug wird in der Y-Achse in die Y-Position der Abrichtspindel bewegt. In dieser Abrichtposition erfolgt das Abrichten des Schleifwerkzeuges durch Bewegung der Abrichtspindel in der X- und Z-Achse. Auch für das Abrichten der Schleifwerkzeuge ist somit keine zusätzliche Hilfsachse erforderlich.

Im folgenden wird die Erfindung anhand eines in der Zeichnung dargestellten Ausführungsbeispiels näher erläutert. Es zeigen
- Figur 1: eine Ansicht der Schleifmaschine von links vorne in der Schleifposition,
- Figur 2: eine Ansicht der Schleifmaschine von rechts vorne in der Schleifposition,
- Figur 3: eine Ansicht der Schleifmaschine von links vorne in der Abrichtposition,
- Figur 4: eine Ansicht der Schleifmaschine von links vorne in der Werkzeugwechselposition,
- Figuren 5 und 6: im Ausschnitt die Entnahme einer Schneidplatte aus einem Werkstückmagazin,
- Figur 7: die Entnahme eines Bohrers aus einem Werk- stückmagazin und
- Figur 8: die Entnahme eines Werkstückträgers aus einem Werkstückmagazin.

Die in der Zeichnung als Ausführungsbeispiel gezeigte Schleifmaschine weist ein horizontales Maschinenbett 10 auf an dessen von der vorderen Benutzerseite abgewandtem hinteren Ende ein vertikaler portalförmiger Maschinenständer 12 angeformt ist. Eine die Schleifmaschine einschließende Kabine ist in der Zeichnung weggelassen, um den inneren Aufbau der Schleifmaschine sichtbar zu machen.

Auf dem Maschinenbett 10 ist an der von vorn nach hinten verlaufenden linken Seite eine in der Y-Achse verlaufende Y-Führung 14 angeordnet, auf welcher ein Y-Schlitten 16 numerisch gesteuert verfahrbar ist. Der Y-Schlitten 16 trägt eine durch einen Motor 18 antreibbare Werkzeugspindel 20, deren Achse in der zur Y-Achse senkrechten horizontalen X-Achse ausgerichtet ist. An der Werkzeugspindel 20 sind Werkzeuge, insbesondere Schleifwerkzeuge 22 spannbar, die um die X-Achse rotierend angetrieben werden.

Im von der Benutzerseite gesehen rückwärtigen Bereich sind auf der Oberseite des Maschinenbettes 10 X-Führungen 24 angeordnet, die senkrecht zu der Y-Führung 14 verlaufen und sich über die Breite des Maschinenbettes erstrecken. Auf der X-Führung 24 ist numerisch gesteuert ein X-Schlitten 26 verfahrbar, der als hochkant stehender Block ausgebildet ist. Zur Stabilisierung des X-Schlittens 26 ist dieser oben in einer zusätzlichen X-Führung 28 an dem oberen Querjoch des Maschinenständers 12 geführt.

An der der Benutzerseite zugewandten vorderen vertikalen Fläche des X-Schlittens 26 ist in einer Z-Führung 30 ein Z-Schlitten 32 numerisch gesteuert in der zu der X- und der Y-Achse senkrechten vertikalen Z-Achse verfahrbar.

An der der vorderen Benutzerseite zugewandten vertikalen Stirnfläche des Z-Schlittens 32 ist ein Teilapparat 34 angeordnet, der um eine in der Y-Richtung verlaufende B-Achse als Rundachse drehbar ist. Der Teilapparat 34 trägt eine Werkstückspanneinrichtung 36, die um ihre als A-Achse ausgebildete Achse mittels eines Antriebs 38 gesteuert drehbar ist. Die A-Achse schneidet die B-Achse rechtwinklig, sodass die Achse der Werkstückspanneinrichtung 36 mittels des Teilapparates 34 in der X-Z-Ebene verschwenkbar ist.

Oberhalb des Teilapparates 34 ist in dem Z-Schlitten 32 eine Abrichtspindel 40 gelagert, die mittels eines Antriebmotors 42 drehend antreibbar ist. Die in der X-Richtung verlaufende Abrichtspindel 40 trägt an ihrem dem Y-Schlitten zugewandten Ende eine Abrichtscheibe 44.

An dem X-Schlitten 26 ist an dessen der Y-Führung 14 zugewandten vertikalen Seite ein Werkzeugmagazin 46 angeordnet. Das Werkzeugmagazin 46 weist ein um eine horizontale in der X-Richtung gelagerte Welle 48 drehbares Magazinrad 50 auf, an dessen Außenumfang in gleichem Winkelabstand Werkzeughalter 52 angeordnet sind. Die Werkzeughalter 52 sind so ausgebildet, dass Werkzeuge, insbesondere Schleifwerkzeuge 22 radial zu dem Magazinrad 50 in die Werkzeughalter 52 eingesetzt bzw. aus diesen entnommen werden können. Die Welle 48 ist in dem X-Schlitten 26 in derselben Höhe bezüglich der Z-Richtung angeordnet, in welcher sich die Werkzeugspindel 20 befindet.

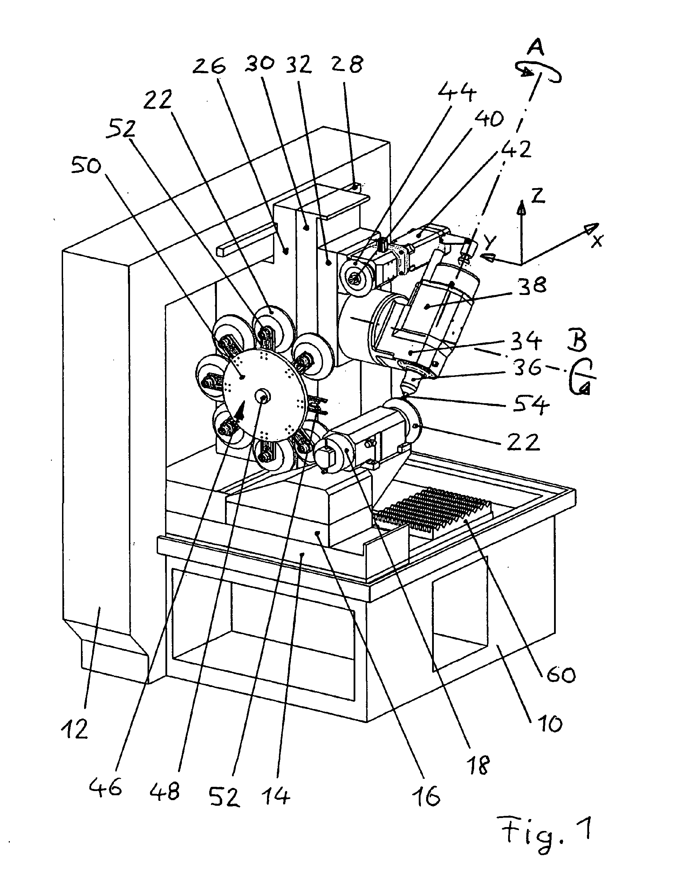

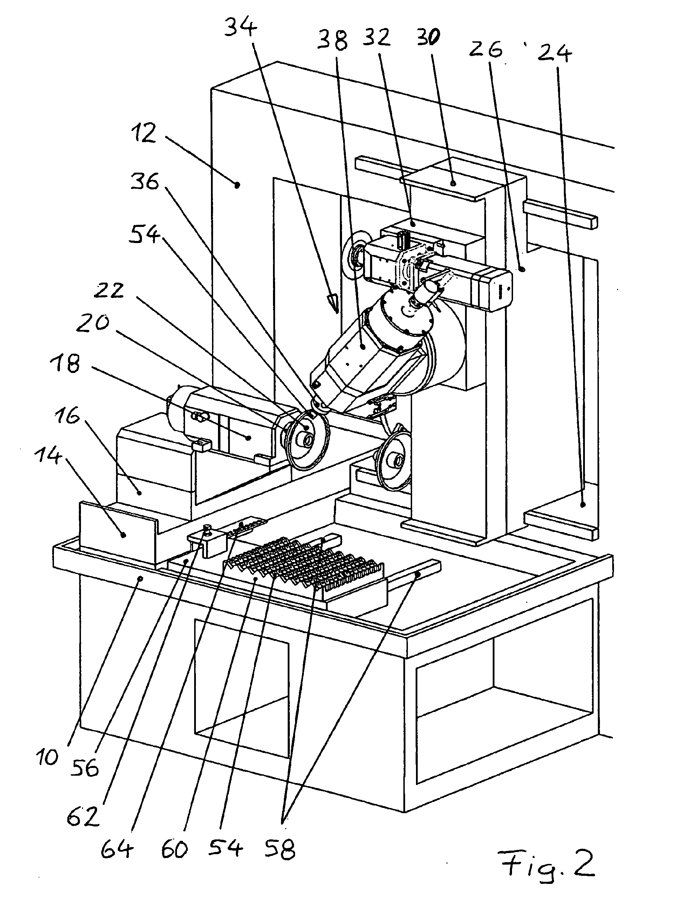

Ein zu bearbeitendes Werkstück 54 wird in der Werkstückspanneinrichtung 36 gespannt. Die Schleifbearbeitung des Werkstückes 54 erfolgt in der in den Figuren 1 und 2 dargestellten Weise durch ein an der Werkzeugspindel 20 gespanntes und rotierend angetriebenes Schleifwerkzeug 22. Die Relativbewegung von Werkstück 54 und Schleifwerkzeug 22 in der Y-Achse wird mittels des Y-Schlittens 16 bewirkt, während die Relativbewegung in der X-Achse und der Z-Achse mittels des X-Schlittens 26 und des Z-Schlittens 32 durch das Werkstück 54 bewirkt wird. Der Anstellwinkel der zu schleifenden Flächen bezüglich der Achse des Werkstückes 54 wird durch Verschwenken der Werkstückspanneinrichtung 36 mittels des Teilapparates 34 um die B-Achse erzeugt. Die Drehung der Werkstückspanneinrichtung 36 um die A-Achse ermöglicht die Ausrichtung der zu bearbeitenden Flächen auf dem Umfang des Werkstückes 54.

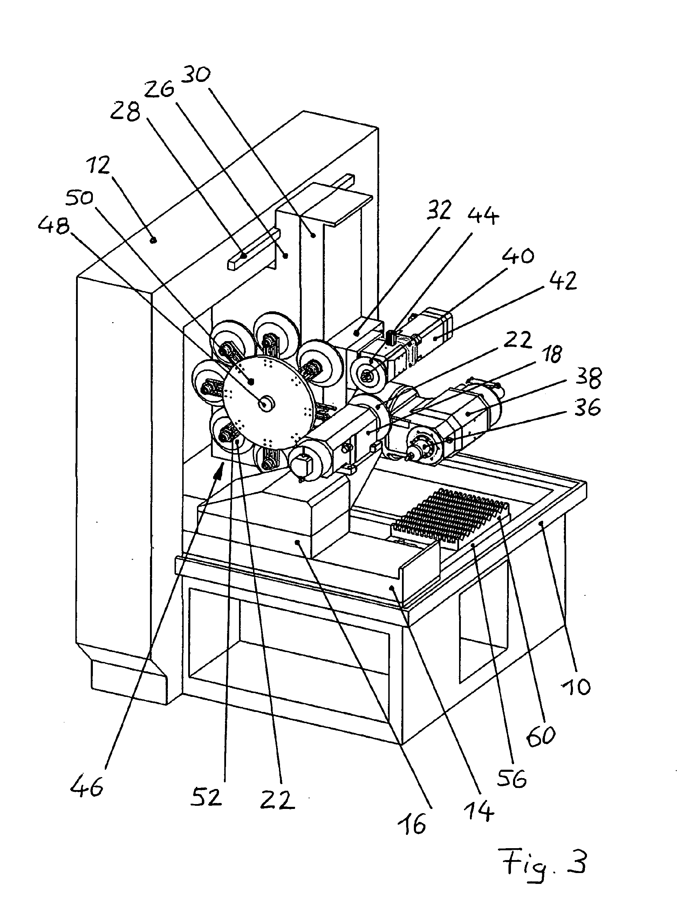

Zum Abrichten des Schleifwerkzeuges 22 wird der Y-Schlitten 16 von der vorderen Benutzerseite in der Y-Achse nach hinten verfahren bis sich die Werkzeugspindel 20 in derselben vertikalen X-Z-Ebene befindet wie die Abrichtspindel 40. Die Abrichtspindel 40 kann nun mittels des Z-Schlittens 32 abgesenkt werden, bis die Abrichtscheibe 44 mit dem Schleifwerkzeug 22 in Berührung kommt, wie dies in Figur 3 gezeigt ist. Da die Werkzeugspindel 20 und die Abrichtspindel 40 achsparallel in der X-Richtung gelagert sind, kann nun das Abrichten des Schleifwerkzeuges 22 durch gesteuertes Verfahren die Abrichtspindel 40 in der X-Achse und in der Z-Achse verfolgen. Für das Abrichten werden somit die gesteuerten Hauptachsen, nämlich die X-Achse und die Z-Achse genutzt, ohne dass zusätzliche Hilfsachsen erforderlich sind. Für das Abrichten wird das Schleifwerkzeug 22 in der Y-Achse gegenüber der Schwenkebene der Werkstückspanneinrichtung 36 nach hinten verschoben, sodass der in Figur 3 gezeigte Abrichtvorgang von der in den Figuren 1 und 2 gezeigten Schleifbearbeitung räumlich getrennt ist und eine Überschneidung und Kollision dieser beiden Bearbeitungsvorgänge zuverlässig ausgeschlossen ist.

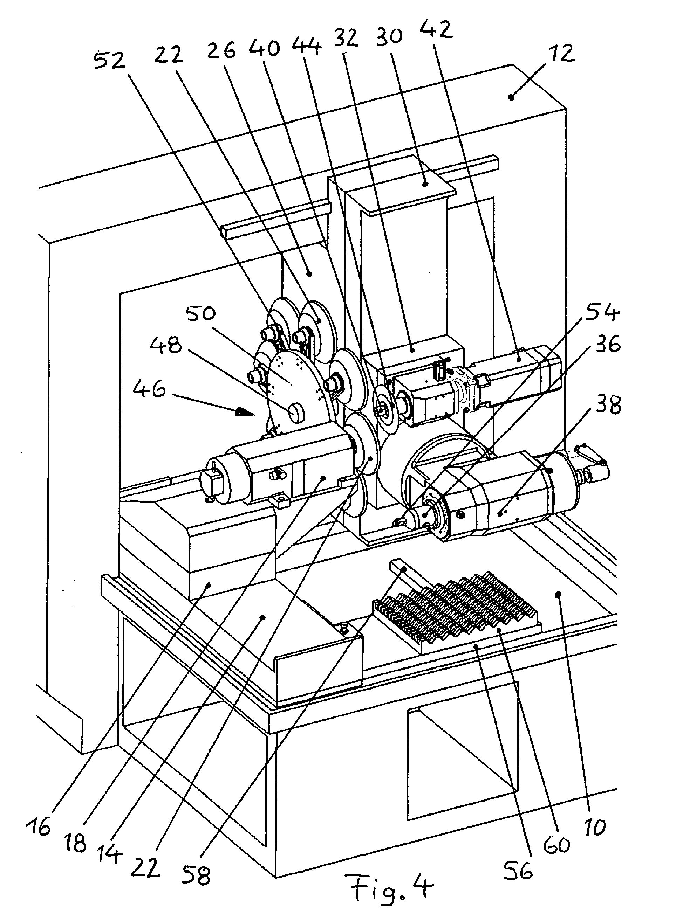

Soll das in der Werkzeugspindel 20 gespannte Werkzeug 22 gegen ein anderes Werkzeug gewechselt werden, so wird das Werkzeugmagazin 46 um die antreibbare Welle 48 so gedreht, dass sich ein leerer Werkzeughalter 52 in der in Figur 1 gezeigten Wechselposition befindet, in welcher dieser leere Werkzeughalter 52 sich in der Höhe der Welle 48 und der Werkzeugspindel 20 befindet und gegen die Werkzeugspindel 20 gerichtet ist. Der Y-Schlitten 16 wird dann in der Y-Achse nach hinten verfahren, wie dies in Figur 4 dargestellt ist. Das an der Werkzeugspindel 20 gespannte Werkzeug 22 wird dabei radial in den leeren Werkzeughalter 52 geschoben und in diesem verrastet. Anschließend wird der X-Schlitten in der X-Achse nach rechts verfahren, wodurch das in dem Werkzeughalter 52 eingerastete Werkzeug 22 axial aus dem Spannkonus der Werkzeugspindel 20 herausgehoben wird. Anschließend wird das Magazinrad 50 gedreht, um ein in einem anderen Werkzeughalter 52 gespeichertes Werkzeug 22 in die Wechselposition zu bringen, in welcher die Achse dieses Werkzeugs 22 mit der Werkzeugspindel 20 axial fluchtet. Der X-Schlitten 26 wird dann in der X-Achse gegen die Werkzeugspindel 20 verfahren, um das einzuwechselnde Werkzeug 22 in den Spannkonus der Werkzeugspindel 20 axial einzusetzen. Nachdem das Werkzeug 22 in der Werkzeugspindel 20 gespannt ist, wird der Y-Schlitten wieder in der Y-Achse nach vorn gefahren, wodurch das in der Werkzeugspindel 20 gespannte Werkzeug 22 aus dem Werkzeughalter 52 radial entnommen wird. Der Y-Schlitten 16 kann nun mit dem neuen Werkzeug 22 in die in den Figuren 1 und 2 gezeigte Bearbeitungsposition verfahren werden.

Auch der Werkzeugwechsel kann allein durch Verfahren der Werkzeugspindel 20 in der Y-Achse und Verfahren des X-Schlittens 26 in der X-Achse durchgeführt werden. Es sind daher für den Werkzeugwechsel keine zusätzlichen gesteuerten Hilfsachsen erforderlich.

Es ist ohne weiteres ersichtlich, dass das Werkzeugmagazin 46 nicht notwendig als drehbares Magazinrad 50 ausgebildet sein muss. Es können auch andere Ausführungen des Werkzeugmagazins 46 verwendet werden, bei welchen Werkzeughalter wahlweise in eine Wechselposition gebracht werden können, in welcher die Werkzeughalter sich auf derselben Höhe wie die Werkzeugspindel 20 befinden, sodass die zu wechselnden Werkzeuge 22 durch Verschiebung des Y-Schlittens 16 in diese Werkzeughalter eingefahren bzw. aus diesen herausgefahren werden können. Bspw. kann ein Werkzeugmagazin mehrere Werkzeughalter aufweisen, die in der Z-Achse übereinander angeordnet sind und in der Z-Achse verschiebbar sind.

Weiter ist es ohne weiteres ersichtlich, dass mit der erfindungsgemäßen Schleifmaschine nicht nur Schleifbearbeitungen durchgeführt werden können, sondern auch andere spanabhebende Bearbeitungen mit rotierenden Werkzeugen, z.B. Fräsbearbeitungen. Hierzu können in dem Werkzeugmagazin 46 außer Schleifwerkzeugen 22 auch Fräswerkzeuge gespeichert und bei Bedarf in die Werkzeugspindel 20 eingewechselt werden.

Die erfindungsgemäße Schleifmaschine ermöglicht auch einen automatischen Werkstückwechsel unter Ausnutzung der für die Schleifbearbeitung erforderlichen linearen Achsen X, Y, Z und der Rotationsachsen A und B.

Hierzu wird auf dem Maschinenbett 10 ein Werkstückmagazin auf der Benutzerseite vor dem X-Schlitten und rechts von der Y-Führung angeordnet.

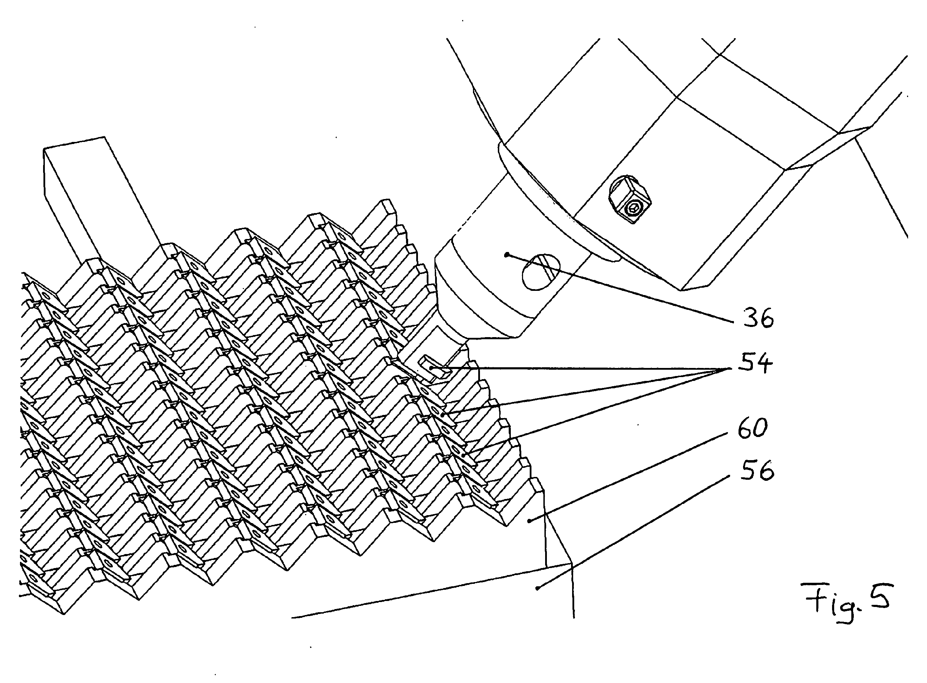

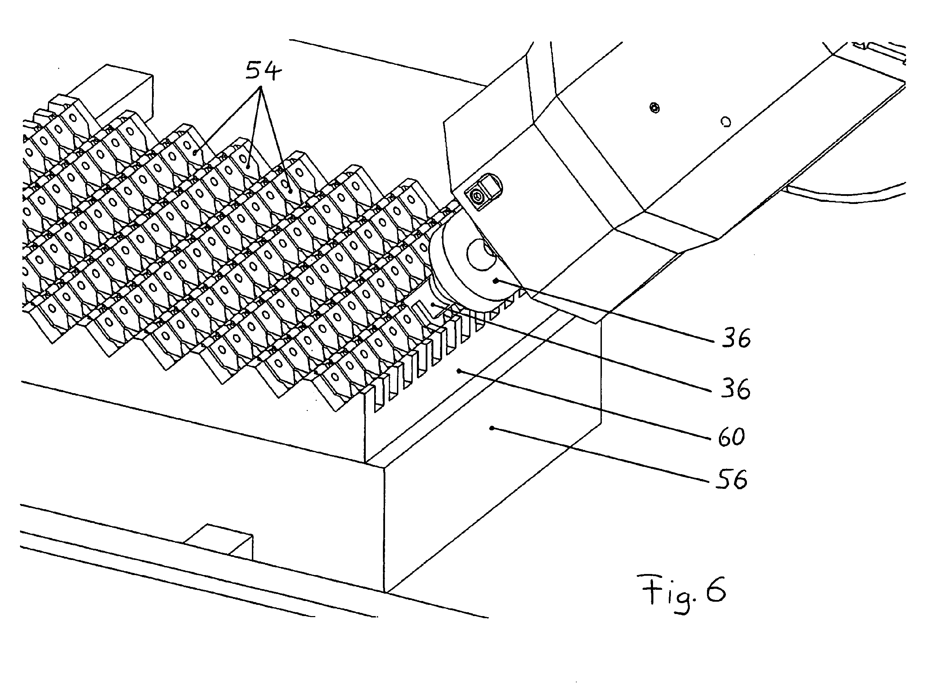

In den Figuren 1 bis 6 weist das Werkstückmagazin eine Trageplatte 56 auf, die auf Führungsleisten 58 in der Y-Achse auf dem Maschinenbett 10 verfahrbar ist. Auf der Trageplatte 56 können die Werkstücke 54 in einer Matrix angeordnet sein, die bspw. in der X- und der Y-Achse in Reihen und Zeilen ausgebildet ist. Im dargestellten Ausführungsbeispiel sind die Werkstücke 54 Schneidplatten oder Stechplatten die in der Matrixanordnung in einer Kassette 60 aufgenommen sind, wobei die Kassette 60 auf die Trageplatte 56 aufgesetzt wird. Um die Werkstücke 54 leichter greifen zu können, sind diese in der Kassette 60 schräg angeordnet, wobei die zu bearbeitende Konturseite in der Kassette 60 nach unten gerichtet ist, wie dies insbesondere auch aus den Figuren 5 und 6 deutlich wird.

Zur Entnahme eines Werkstückes 54 wird die Werkstückspanneinrichtung 36 um die B-Achse so verschwenkt, dass die Achse der Werkstückspanneinrichtung 36 senkrecht zur Ebene der Platten der Werkstücke 54 steht. Die Sapnnbacken der Werkstückspanneinrichtung 36 werden durch Drehung um die A-Achse auf die Werkstücke 54 ausgerichtet, wie dies Figur 5 zeigt. Durch Bewegung in der X-Achse und der Z-Achse kann nun die Werkstückspanneinrichtung 36 auf das zu entnehmende Werkstück 54 aufgeschoben werden wie dies Figur 6 zeigt. Das gespannte Werkstück 54 kann nun aus der Kassette 60 entnommen und zur Bearbeitung an das Schleifwerkzeug 22 bewegt werden. In umgekehrter Abfolge wird das bearbeitete Werkstück 54 wieder in die Kassette 60 zurück gegeben.

Um die Werkstücke 54 aus der Matrixanordnung in dem Werkstückmagazin wechseln zu können, muss die Werkstückspanneinrichtung 36 an jeder Matrixposition des Werkstückmagazins positioniert werden können. Die Positionierung in der X-Achse erfolgt dabei durch Verfahren des X-Schlittens 26. Zur Positionierung in der Y-Achse wird die Trageplatte 56 auf den Führungsleisten 58 bewegt. Hierzu ist auf der Trageplatte 56 ein abgefederter Bolzen 62 angeordnet, der mit einer unterhalb der Werkzeugspindel 20 auf dem Maschinenbett 10 angeordneten, in der Y-Richtung verlaufenden Lochleiste 64 zusammen wirkt. Eine an der Unterseite des Y-Schlittens 16 unter der Werkzeugspindel 20 angeordnete Löseeinheit, z.B. eine pneumatische Löseeinheit, zieht den Bolzen 62 gegen dessen Abfederung aus dem jeweiligen Loch der Lochleiste 64, wodurch der Bolzen 62 zum einen von der Lochleiste 64 frei kommt und zum anderen mit dem Y-Schlitten 16 gekuppelt wird. Durch Verfahren des Y-Schlittens 16 kann nun die Trageplatte 56 mit ihrem Bolzen 62 über einem anderen Loch der Lochleiste 64 positioniert werden. Durch Freigabe des Bolzens 62 rastet dieser wieder unter Federwirkung in die Lochleiste 64 ein, um die Trageplatte 56 und damit die Kassette 60 in der Y-Achse neu zu positionieren. Der Lochabstand der Lochleiste 64 entspricht dabei dem Abstand der Werkstücke 54 in der Y-Achse in der Kassette 60.

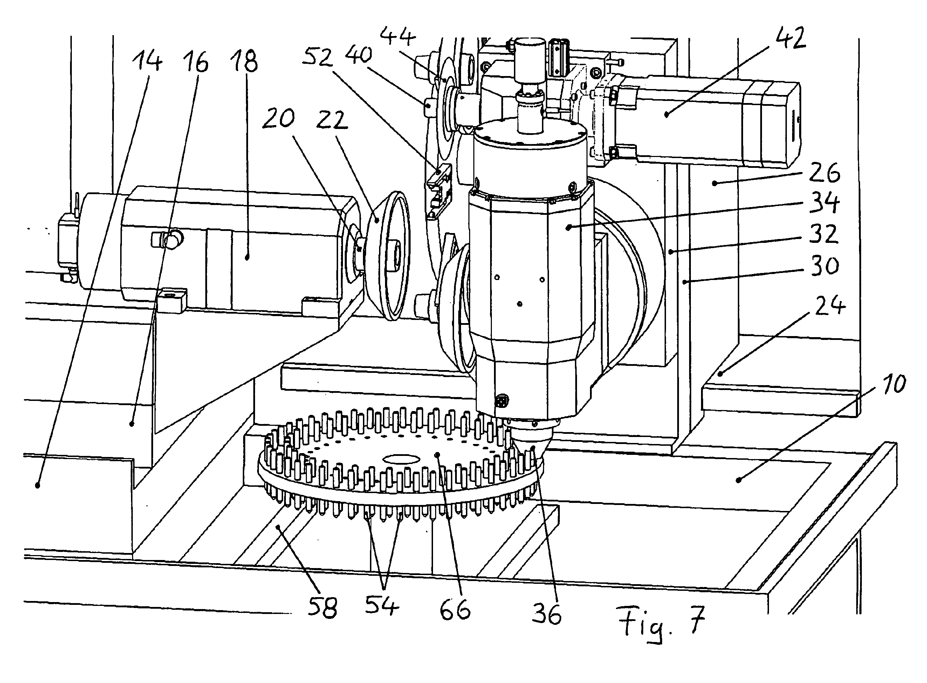

Figur 7 zeigt ein anderes Beispiel für das Werkstückmagazin. Hierbei weist das Werkstückmagazin ein Magazinrad 66, welches alternativ oder gegebenenfalls auch austauschbar zu der Trageplatte 56 eingesetzt werden kann. Das Magazinrad 66 ist um eine vertikale Achse (Z-Achse) drehbar auf dem Maschinenbett 10 gelagert. Das Magazinrad 66 trägt in Umfangrichtung angeordnet die Werkstücke 54, die im Beispiel der Figur 7 als Bohrer dargestellt sind. Die Werkstücke 54 können in mehreren konzentrischen Kreisen in dem Magazinrad 66 aufgenommen sein.

Für den Werkstückwechsel wird die Werkstückspanneinrichtung 36 mittels des Teilapparates 34 in die vertikale Z-Achse ausgerichtet. Durch Absenken in der Z-Achse kann die Werkstückspanneinrichtung 36 ein Werkstück 54 aus dem Magazinrad 66 entnehmen oder in dieses Magazinrad 66 abgeben. Zur Auswahl des Magazinplatzes wird das Magazinrad 66 so gedreht, dass sich das zu wechselnde Werkstück 54 in der Y-Position der Werkstückspanneinrichtung 36 befindet. Die Auswahl der konzentrischen Reihen von Werkstücken 54 verfolgt dabei durch Bewegung der Werkstückspanneinrichtung 36 in der X-Achse mittels des X-Schlittens 26.

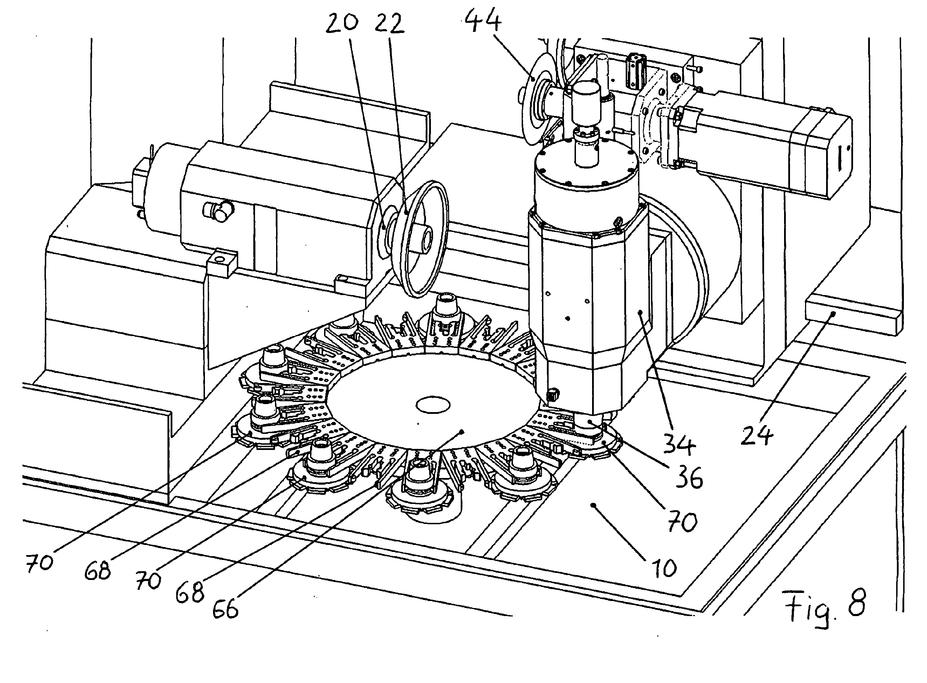

Figur 8 zeigt eine weitere Ausführung des Werkstückmagazins. Auch hier ist das Werkstückmagazin mit einem um eine vertikale Achse (Z-Achse) drehbaren Magazinrad 66 ausgebildet. Das Magazinrad 66 weist an seinem Außenumfang Werkstückhalter 68 auf, in welche Werkstückträger 70 radial eingesetzt und entnommen werden können. Um einen Werkstückträger 70 aus dem Magazinrad 66 zu entnehmen, wird die Werkstückspanneinrichtung 36 in der Z-Achse auf den ausgewählten Werkstückträger 70 aufgesetzt, um den Werkstückträger 70 zu spannen. Abschließend wird die Werkstückspanneinrichtung 36 mittels des X-Schlittens 26 in der X-Achse verfahren, um den Werkstückträger 70 radial aus dem Werkstückhalter 68 zu entnehmen. In dem umgekehrten Bewegungsablauf kann ein bearbeiteter Werkstückträger 70 in einen freien Werkstückhalter 68 des Werkstückmagazins abgegeben werden.

Auch der automatische Werkstückwechsel kann erfindungsgemäß durch die Ausnützung der fünf Hauptachsen (X, Y, Z, A, B) durchgeführt werden, ohne dass hierzu numerisch gesteuerter Hilfsachsen notwendig sind.

### Bezugszeichenliste

- 10: Maschinenbett
- 12: Maschinenständer
- 14: Y-Führung
- 16: Y-Schlitten
- 18: Motor
- 20: Werkzeugspindel
- 22: Schleifwerkzeuge
- 24: X-Führung
- 26: X-Schlitten
- 28: zusätzliche X-Führung
- 30: Z- Führung
- 32: Z-Schlitten
- 34: Teilapparat
- 36: Werkstückspanneinrichtung
- 38: Antrieb
- 40: Abrichtspindel
- 42: Antriebsmotor
- 44: Abrichtscheibe
- 46: Werkzeugmagazin
- 48: Welle
- 50: Magazinrad
- 52: Werkzeughalter
- 54: Werkstück
- 56: Trageplatte
- 58: Führungsleisten
- 60: Kassette
- 62: Bolzen
- 64: Lochleiste
- 66: Magazinrad
- 68: Werkstückhalter
- 70: Werkstückträger

## Patentansprüche

1. Schleifmaschine mit einem Maschinenbett(10), mit einem an dem Maschinenbett (10) nur in einer Y-Achse linear verfahrbaren Y-Schlitten (16), mit einer Werkzeugspindel (20), die in dem Y-Schlitten (16) um eine zur Y-Achse senkrechte X-Achse drehbar gelagert und rotierend antreibbar ist, mit einem an dem Maschinenbett (10) in der X-Achse linear verfahrbaren X-Schlitten (26), mit einem an dem X-Schlitten (26) in einer zur X-Achse und Y-Achse senkrechten Z-Achse linear verfahrbaren Z-Schlitten (32), mit einer Werkstückspanneinrichtung (36), die an dem Z-Schlitten (32) um eine zur Y-Achse parallel B-Achse schwenkbar angeordnet und um ihre zur B-Achse senkrechte A-Achse drehbar ist, und mit einem Werkzeugmagazin(46), welches Werkzeuge (22) mit zur X-Achse paralleler Achse aufnimmt,
**dadurch gekennzeichnet, dass** das Werkzeugmagazin (46) an dem X-Schlitten (26) von dem Z-Schlitten (32) in Y-Richtung beabstandet angeordnet ist und dass für einen Werkzeugwechsel der Y-Schlitten (16) in eine Wechselposition verfahrbar ist, in welcher die Werkzeugspindel (20) in der X-Achse mit einer Werkzeugaufnahme (52) des Werkzeugmagazins (46) fluchtet.

2. Schleifmaschine nach Anspruch 1,
**dadurch gekennzeichnet, dass** die Y-Achse horizontal von der vorderen Benutzerseite der Schleifmaschine nach hinten verläuft.

3. Schleifmaschine nach Anspruch 1,
**dadurch gekennzeichnet, dass** das Werkzeugmagazin (46) wenigstens einen Werkzeughalter (52) aufweist, der sich in der Z-Richtung auf derselben Höhe wie die Werkzeugspindel (20) befindet, dass die Werkzeugspindel (20) mit einem in der Werkzeugspindel (20) gespannten Werkzeug (22) in der Y-Achse in den Werkzeughalter (52) einfahren und aus dem Werkzeughalter (52) ausfahren kann und dass ein in dem Werkzeughalter (52) aufgenommenes Werkzeug (22) durch Verfahren des Werkzeugmagazins (46) in der X-Achse aus der Werkzeugspindel (20) entnommen und in die Werkzeugspindel (20) eingesetzt werden kann.

4. Schleifmaschine nach Anspruch 3,
**dadurch gekennzeichnet, dass** das Werkzeugmagazin (46) mehrere Werkzeughalter (52) aufweist, die wahlweise in die Wechselposition gebracht werden können, in welcher sie sich auf derselben Höhe wie die Werkzeugspindel (20) befinden.

5. Schleifmaschine nach Anspruch 4,
**dadurch gekennzeichnet, dass** das Werkzeugmagazin (46) ein Magazinrad (50) aufweist, welches um eine zur X-Achse parallele Welle (48) drehbar an dem X-Schlitten (26) gelagert ist und an seinem Umfang die Werkzeughalter (52) aufweist.

6. Schleifmaschine nach einem der vorhergehenden Ansprüche,
**dadurch gekennzeichnet, dass** an dem Maschinenbett (10) ein Werkstückmagazin (56, 66) anbringbar ist und dass für einen Werkstückwechsel die Werkstückspanneinrichtung (36) durch Drehung um die B-Achse gegen das Werkstückmagazin (56, 66) ausgerichtet und mittels des Z-Schlittens (32) und gegebenenfalls des X-Schlittens (26) gegen das Werkstückmagazin (56, 66) bewegbar ist.

7. Schleifmaschine nach Anspruch 6,
**dadurch gekennzeichnet, dass** das Werkstückmagazin (66) Werkstücke (54) mit zur Z-Achse paralleler Achse aufnimmt und die Werkstückspanneinrichtung (36) für den Werkstückwechsel in der Z-Richtung ausgerichtet ist.

8. Schleifmaschine nach Anspruch 7,
**dadurch gekennzeichnet, dass** das Werkstückmagazin ein Magazinrad (66) aufweist, welches um eine zur Z-Achse parallele Achse drehbar ist und die Werkstücke (54) mit zur Z-Achse paralleler Achse aufnimmt und dass durch Drehung des Magazinrades (66) jeweils ein zu wechselndes Werkstück (54) in eine mit der Werkstückspanneinrichtung (36) fluchtende Wechselstellung gebracht werden kann.

9. Schleifmaschine nach Anspruch 8,
**dadurch gekennzeichnet, dass** das Magazinrad (66) an seinem Umfang Werkstückhalter (68) für Werkstücke (54) oder Werkstückträger (70) aufweist und dass die Werkstückspanneinrichtung (36) durch Verfahren des X-Schlittens (26) die Werkstücke (54) oder Werkstückträger (70) in die Werkstückhalter (68) einfahren und aus diesen herausfahren kann.

10. Schleifmaschine nach Anspruch 6,
**dadurch gekennzeichnet, dass** das Werkstückmagazin (56) Werkstücke (54) in einer MatrixAnordnung aufnimmt, dass das Werkzeugmagazin (56) in der Y-Achse verfahrbar ist und dass die Werkzeugspanneinrichtung (36) an einem jeweils ausgewählten Magazinplatz durch Verfahren der Werkstückspanneinrichtung (36) in der X-Achse und Verfahren des Werkstückmagazins (56) in der Y-Achse positioniert werden kann.

11. Schleifmaschine nach Anspruch 10,
**dadurch gekennzeichnet, dass** das Werkstückmagazin (56) zum Verfahren in der Y-Achse mit dem Y-Schlitten (16) kuppelbar ist.

12. Schleifmaschine nach Anspruch 10 oder 11,
**dadurch gekennzeichnet, dass** die Werkstücke (54) Schneidplatten sind, die in dem Werkstückmagazin (56, 60) schräg gestellt aufgenommen sind und dass die Werkstückspanneinrichtung (36) für den Werkstückwechsel um ihre B-Achse in einer zur Ebene der Schneidplatten senkrechten Richtung ausgerichtet wird.

13. Schleifmaschine nach einem der vorhergehenden Ansprüche,
**dadurch gekennzeichnet, dass** an dem Z-Schlitten (32) von der Werkstückspanneinrichtung (36) beabstandet eine Abrichtspindel (40) angeordnet ist, die um ihre in der X-Richtung liegende Achse drehend antreibbar ist und dass zum Abrichten eines an der Werkzeugspindel (20) gespannten Schleifwerkzeugs (22) der Y-Schlitten (16) in eine Abrichtposition gefahren wird und in dieser Abrichtungsposition das Abrichten durch Bewegung der Abrichtspindel (40) in der X-Achse mittels des X-Schlittens (26) und in der Z-Achse mittels des Z-Schlittens (32) durchgeführt wird.

14. Schleifmaschine nach Anspruch 13,
**dadurch gekennzeichnet, dass** die Abrichtspindel in der Z-Richtung oberhalb und beabstandet zu der Werkstückspanneinrichtung an dem Z-Schlitten angeordnet ist.

15. Schleifmaschine nach einem der Ansprüche 1 ,2, 6 und 13,
**dadurch gekennzeichnet, dass** die Werkstückspanneinrichtung (36), die Abrichtspindel (40) und das Werkzeugmagazin (56, 66) in der Y-Richtung gegeneinander beabstandet angeordnet sind.

16. Schleifmaschine nach einem der vorhergehenden Ansprüche,
**dadurch gekennzeichnet, dass** das Maschinenbett (10) horizontal angeordnet ist, dass der Y-Schlitten (16) und der X-Schlitten (26) horizontal auf dem Maschinenbett (10) verfahrbar sind und dass der Z-Schlitten (32) vertikal von oben gegen die Werkzeugspindel (20) verfahrbar ist.

## Claims

1. A grinding machine with a machine bed (10), with a Y slide (16) movable in a linear manner only in a Y axis on the machine bed (10), with a tool spindle (20) which is mounted in the Y slide (16) so as to be rotatable about an X axis at a right angle to the Y axis and which is capable of being driven in a rotating manner, with an X slide (26) movable in a linear manner in the X axis on the machine bed (10), with a Z slide (32) movable in a linear manner on the X slide (26) in a Z axis at a right angle to the X axis and the Y axis, with a workpiece-clamping device (36) which is arranged on the Z slide (32) so as to be pivotable about a B axis parallel to the Y axis and which is rotatable about the A axis thereof at a right angle to the B axis, and with a tool magazine (46) which receives tools (22) with an axis parallel to the X axis, **characterized in that** the tool magazine (46) is arranged on the X slide (26) at a distance from the Z slide (32) in the Y direction, and for a tool change the Y slide (16) is movable into a changing position in which the tool spindle (20) is in alignment in the X axis with a tool reception means (52) of the tool magazine (46).

2. A grinding machine according to claim 1, **characterized in that** the Y axis extends horizontally from the front user side of the grinding machine towards the rear.

3. A grinding machine according to claim 1, **characterized in that** the tool magazine (46) has at least one tool holder (52) which is situated as the same height as the tool spindle (20) in the Z direction, the tool spindle (20) with a tool (22) clamped in the tool spindle (20) can move in the Y axis into the tool holder (52) and can move out of the tool holder (52), and a tool (22) received in the tool holder (52) can be removed from the tool spindle (20) and can be inserted into the tool spindle (20) by movement of the tool magazine (46) in the X axis.

4. A grinding machine according to claim 3, **characterized in that** the tool magazine (46) has a plurality of tool holders (52) which can be moved selectively into the changing position in which they are situated at the same height as the tool spindle (20).

5. A grinding machine according to claim 4, **characterized in that** the tool magazine (46) has a magazine wheel (50) which is mounted on the X slide (26) so as to be rotatable about a shaft (48) parallel to the X axis and which has the tool holder (52) on its periphery.

6. A grinding machine according to any one of the preceding claims, **characterized in that** a workpiece magazine (56, 66) is capable of being attached to the machine bed (10), and in order to change workpieces the workpiece-clamping device (36) is orientated by rotation about the B axis towards the workpiece magazine (56, 66) and is movable by means of the Z slide (32) and optionally the X slide (26) towards the workpiece magazine (56, 66).

7. A grinding machine according to claim 6, **characterized in that** the workpiece magazine (66) receives workpieces (54) with the axis parallel to the Z axis, and the workpiece-clamping device (36) is orientated in the Z direction for the workpiece change.

8. A grinding machine according to claim 7, **characterized in that** the workpiece magazine has a magazine wheel (66) which is rotatable about an axis parallel to the Z axis and receives the workpieces (54) with an axis parallel to the Z axis, and by means of the rotation of the magazine wheel (66) a workpiece (54) to be changed can be moved in each case into a change position in alignment with the workpiece-clamping device (36).

9. A grinding machine according to claim 8, **characterized in that** the magazine wheel (66) has workpiece holders (68) for workpieces (54) or workpiece carriers (70) on its periphery, and by movement of the X slide the workpiece-clamping device (36) can move the workpieces (54) or workpiece carriers (70) into the workpiece holders (68) and can move them out of the latter.

10. A grinding machine according to claim 6, **characterized in that** the workpiece magazine (56) receives workpieces (54) in a matrix arrangement, the tool magazine (56) [*sic*] is movable in the Y axis and the tool-clamping device (36) [*sic*] can be positioned by movement of the workpiece-clamping device (36) in the X axis and by movement of the workpiece magazine (56) in the Y axis on a magazine position selected in each case.

11. A grinding machine according to claim 10, **characterized in that** the workpiece magazine (56) is capable of being coupled to the Y slide (16) for movement in the Y axis.

12. A grinding machine according to claim 10 or 11, **characterized in that** the workpieces (54) are cutting plates which are received obliquely positioned in the workpiece magazine (56, 60), and in order to change the workpieces about the B axis thereof the workpiece-clamping device (36) is orientated in a direction at a right angle to the plane of the cutting plates.

13. A grinding machine according to any one of the preceding claims, **characterized in that** a dressing spindle (40), which is capable of being driven so as to rotate about the axis thereof situated in the X direction, is arranged on the Z slide (32) at a distance from the workpiece-clamping device (36), and in order to dress a grinding tool (22) clamped on the tool spindle (20) the Y slide (16) is moved into a dressing position and the dressing is carried out in this dressing position by movement of the dressing spindle (40) in the X axis by means of the X slide (26) and in the Z axis by means of the Z slide (32).

14. A grinding machine according to claim 13, **characterized in that** the dressing spindle is arranged above and at a distance from the workpiece-clamping device on the Z slide in the Z direction.

15. A grinding machine according to any one of claims 1, 2, 6 and 13, **characterized in that** the workpiece-clamping device (36), the dressing spindle (40) and the tool magazine (56, 60) [*sic*] are arranged at a distance from one another in the Y direction.

16. A grinding machine according to any one of the preceding claims, **characterized in that** the machine bed (10) is arranged horizontally, the Y slide (16) and the X slide (26) are movable horizontally on the machine bed (10) and the Z slide (32) is movable vertically from above towards the tool spindle (20).

## Revendications

1. Affûteuse comprenant :
- un bâti de machine (10),
- un chariot Y (16) mobile suivant un mouvement linéaire seulement suivant un axe Y,
- une broche porte-outil (20) montée pivotante sur le chariot Y (16) autour d'un axe X perpendiculaire à l'axe Y et entraînée en rotation,
- un chariot X (26) mobile suivant un mouvement linéaire sur le bâti de la machine (10) suivant l'axe X,
- un chariot Z (32) mobile suivant un mouvement linéaire sur le chariot X (26) suivant un axe Z perpendiculaire à l'axe X et à l'axe Y,
- une installation de serrage de pièce (36) montée de manière basculante sur le chariot Z (32) autour d'un axe B parallèle à l'axe Y et pivotant autour d'un axe A perpendiculaire à son axe B, et
- un magasin d'outils (46) recevant les outils (22) avec un axe parallèle à l'axe X,
affûteuse **caractérisée en ce que**
- le magasin d'outils (46) est monté sur le chariot X (26) en étant distant du chariot Z (32) dans la direction Y, et
- pour un changement d'outil, le chariot Y (16) est conduit dans une position de changement dans laquelle, la broche d'outil (20) est alignée suivant l'axe X sur un logement d'outil (52) du magasin d'outils (46).

2. Affûteuse selon la revendication 1,
**caractérisée en ce que**
l'axe Y est un axe horizontal dirigé vers l'arrière à partir du côté avant occupé par l'utilisateur de l'affûteuse.

3. Affûteuse selon la revendication 1,
**caractérisée en ce que**
le magasin d'outils (46) comporte au moins un porte-outil (52) qui se trouve dans la direction Z à la même hauteur que la broche d'outil (20),
- la broche d'outil (20) avec un outil (22) serré dans la broche (20) pénètre dans le porte-outil (52) et se dégage du porte-outil (52) suivant l'axe Y, et
- un outil (22) logé dans le porte-outil (52) se prélève par le déplacement du magasin d'outils (46) dans l'axe X de la broche d'outil (20) pour se placer dans la broche d'outil (20).

4. Affûteuse selon la revendication 3,
**caractérisée en ce que**
le magasin d'outils (46) comporte plusieurs porte-outils (52) qui peuvent être mis au choix dans la position de changement dans laquelle ils se trouvent à la même hauteur que la broche d'outil (20).

5. Affûteuse selon la revendication 4,
**caractérisée en ce que**
le magasin d'outils (46) comporte un magasin rotor (50) tournant autour d'un axe (48) parallèle à l'axe X en étant monté sur le chariot X (26) et dont la périphérie est munie des porte-outils (52).

6. Affûteuse selon l'une des revendications précédentes, **caractérisé en ce qu'**
un magasin de pièces (56, 66) peut être installé sur le bâti (10) de la machine, et
pour un changement de pièce, l'installation de serrage de pièce (36) est alignée par rotation autour de l'axe B par rapport au magasin de pièces (56, 66) et elle est déplacée par le chariot Z (32) et le cas échéant le chariot X (26), contre le magasin de pièces (56, 66).

7. Affûteuse selon la revendication 6,
**caractérisée en ce que**
le magasin de pièces (66) reçoit des pièces (54) dont l'axe est parallèle à l'axe Z et l'installation de serrage de pièce (36) est conçue pour le changement de pièce dans la direction Z.

8. Affûteuse selon la revendication 7,
**caractérisée en ce que**
le magasin d'outils comporte un magasin rotor (66) tournant autour d'un axe parallèle à l'axe Z et recevant les pièces (54) avec un axe parallèle à l'axe Z, et
par rotation du magasin rotor (66), chaque fois une pièce (54) à remplacer, est mise dans une position de changement alignée sur l'installation de serrage de pièce (36).

9. Affûteuse selon la revendication 8,
**caractérisée en ce que**
le magasin rotor (66) comporte à sa périphérie des supports de pièce (68) pour recevoir des pièces (54) ou pour recevoir des porte-pièces (70), et
l'installation de serrage de pièce (36) engage ou dégage des pièces (54) ou des porte-pièces (70) dans le support de pièce (68) par le déplacement du chariot X (26).

10. Affûteuse selon la revendication 6,
**caractérisée en ce que**
- le magasin de pièces (56) comporte des pièces (54) suivant une disposition en matrice,
- le magasin de pièces (56) est mobile dans la direction de l'axe Y, et
- l'installation de serrage d'outil (36) peut être positionnée à un emplacement respectivement choisi du magasin par déplacement de l'installation de serrage de pièce (36) suivant l'axe X et déplacement du magasin de pièces (56) dans la direction de l'axe Y.

11. Affûteuse selon la revendication 10,
**caractérisée en ce que**
le magasin de pièces (56) est couplé au chariot Y (16) pour se déplacer suivant l'axe Y.

12. Affûteuse selon la revendication 10 ou 11,
**caractérisée**' en ce que
les pièces (54) sont des plaquettes de coupe logées en position inclinée dans le magasin de pièces (56, 60), et pour un changement de pièce, l'installation de serrage de pièce (36) est alignée autour de son axe B dans une direction perpendiculaire au plan des plaquettes de coupe.

13. Affûteuse selon l'une des revendications précédentes, **caractérisée en ce que**
- une broche de dressage (40) est installée sur le chariot Z (32), écartée de l'installation de serrage de pièce (36), cette broche étant entraînée en rotation autour de son axe situé dans la direction X, et
- pour le dressage d'un outil d'affûtage (22) serré dans la broche d'outil (20), le chariot Y (16) est conduit dans une position de dressage dans laquelle on effectue le dressage en déplaçant la broche de dressage (40) suivant l'axe X à l'aide du chariot X (26) et suivant l'axe Z, à l'aide du chariot Z (32).

14. Affûteuse selon la revendication 13,
**caractérisée en ce que**
la broche de dressage montée sur le chariot Z est écartée de l'installation de serrage de pièce au-dessus, dans la direction Z.

15. Affûteuse selon l'une des revendications 1, 2, 6 et 13,
**caractérisée en ce que**
l'installation de serrage de pièce (36), la broche de dressage (40) et le magasin d'outils (56, 66) sont installés en position écartée les uns des autres dans la direction Y.

16. Affûteuse selon l'une des revendications précédentes,
**caractérisée en ce que**
le bâti de machine (10) est horizontal, le chariot Y (16) et le chariot X (26) sont mobiles horizontalement sur le bâti de machine (10) et le chariot Z (32) est mobile verticalement à partir du haut vers la broche d'outil (20).
